# EUROPÄISCHE PATENTSCHRIFT

(11) **EP 0 334 091 B1**
(45) Veröffentlichungstag und Bekanntmachung des Hinweises auf die Patenterteilung: **27.01.1993**
(21) Anmeldenummer: 89103907.5
(22) Anmeldetag: 06.03.1989
(51) Int. Cl.: H01M 2/16, H01M 10/06

(54) **Separator aus Glasfaservlies**
Separator of non woven glass fibres
Séparateur en non-tissé formé de fibres de verre

(30) Priorität: 25.03.1988 DE 3810125
(43) Veröffentlichungstag der Anmeldung: 27.09.1989
(73) Patentinhaber: VARTA Batterie Aktiengesellschaft, D-30405 Hannover (DE)
(72) Erfinder: Kujawa, Wolfgang, D-3008 Garbsen 1 (DE)
(74) Vertreter: Kaiser, Dieter Ralf, Dipl.-Ing.

(56) Entgegenhaltungen:
- DE-B- 2 720 250
- DE-B- 2 839 845
- DE-C- 711 484

## Beschreibung

Die Erfindung betrifft einen Separator für Bleiakkumulatoren aus einem Glasfaservlies mit einem Bindemittel sowie ein Verfahren zum Herstellen eines solchen Separators. Das Anwendungsgebiet der Erfindung erstreckt sich insbesondere auf gasdichte Bleiakkumulatoren.

Glasfaservliese in der Form von Matten oder als Bandmaterial sind kompressibel, hochporös und kapillarwirkend. Sie dienen der elektrischen Isolation und werden deshalb seit langem in der Batterietechnik, insbesondere in gasdicht arbeitenden Akkumulatorenzellen vom Blei-Säure-Typ, als Trennelemente zwischen jeweils einer positiven und einer negativen Elektrodenplatte eingesetzt. Bedingt durch den Engeinbau der Plattenblöcke zwischen den Zellenwänden, sind sie bereits bei der Montage gewissen Kompressionskräften unterworfen, welche ihre ursprünglichen Kapillareigenschaften verändern.

Die Herstellung von Glasfaservliesen geschieht auf eine der Papiererzeugung sehr ähnliche Weise, nämlich durch Aufschlämmen von Glasfasern in Wasser und Weiterverarbeitung der Faserpulpe durch Absieben, Entwässern und Trocknen, wobei ein Wirrfaservlies erhalten wird, dem ggf. durch Imprägnierung mit einem säureresistenten Bindemittel noch eine gewisse Festigkeit verliehen werden kann.
Ein aus Glasfasern bestehendes und nach einer solchen Standardtechnik hergestelltes Separatormaterial zur Verwendung in wartungsfreien, insbesondere säureauslaufsicheren Bleibatterien wird beispielsweise in der DE-AS 28 39 845 beschrieben. Ein solcher Vliesseparator ist in hohem Maße saugfähig, zugleich kompressibel und füllt dadurch den Raum zwischen benachbarten Elektrodenplatten vollständig aus. Der in der Akkumulatorenzelle vorhandene Säureelektrolyt ist dabei zum überwiegenden Teil vom Separator und nur ein geringer Rest vom aktiven Elektrodenmaterial absorbiert.

Für die einwandfreie gasdichte Batteriefunktion ist es nun wichtig, daß das Separatorvlies vollflächig und mit innigem Kontakt an den Platten anliegt, so daß die Oberflächen der Elektrodenplatten in ihrer Gesamtheit für die elektrochemischen Vorgänge ausreichend mit Elektrolyt versorgt sind, wobei außerdem noch, da ja der wartungsfreie Akkumulator im Sauerstoffzyklus arbeitet, elektrolytfreie Porenkanäle für den Gastransport vorhanden sein müssen.

Von diesen idealen Vorstellungen weicht die praktische Erfahrung jedoch im allgemeinen ab, weil durch das Eindringen des Elektrolyten in den Scheider, das durch seine Docht- und Kapillaraktivität begünstigt wird, eine Tendenz zur Dickenabnahme besteht, wobei insbesondere dann, wenn der imprägnierte Anteil des Scheiders geringer ist, seine Dicke noch weiter zurückgeht. Demgemäß verschlechtert sich der zunächst enge Kontakt des betreffenden Scheiders mit den Elektrodenplatten, und die Lebensdauer der Batterie ist verkürzt.

Andererseits muß eine zu starke Kompressionskraft innerhalb des eingebauten Plattenstapels, die z.B. durch Toleranzüberschreitungen bei den Plattendicken entstehen kann, vermieden werden, weil sie die Dichte des Scheiders erhöht mit dem Ergebnis, daß die Elektrolyt-Absorptionsfähigkeit des Scheiders abnimmt. Damit wird aber die vom Scheider aufgesaugte Elektrolytmenge unzureichend, und die Batterieleistung verschlechtert sich ebenfalls.

Aus der DE-OS 35 43 617 ist ein Vliesseparator bekannt, in den Abstandshalter mit Stützflächen so eingearbeitet sind, daß sie auch nach dem Komprimieren des Plattensatzes eine Mindestdicke des Separators garantieren und dafür sorgen, daß das Separatormaterial mit einem definierten Flächendruck an den Elektrodenplatten anliegt.
Ein anderes Faservlies, das als Trennelement in einem verschlossenen Bleiakkumulator eingesetzt ist, soll gemäß DE-OS 35 08 783 dadurch ausreichende Absorptionsfähigkeit nach dem Einbau bewahren, daß das Fasermaterial den Zwischenraum zwischen zwei Platten in einer Schichtanordnung ausfüllt, derart, daß bei den Elektrodenpolaritäten stets eine Schicht aus Fasern mit kleinem Durchmesser anliegt und die Mitte von einer dickeren Schicht aus Fasern großer Dicke eingenommen wird.

In gewöhnlichen Glasfaservliesen sind dicke und dünne Fasern meist gemischt, wobei Fasern mit einem Durchmesser > 5 µm vergleichsweise als "dick" gelten dürfen. Diese erhöhen vor allem die mechanische Festigkeit und Rückstellkraft des Vliesscheiders. Dagegen sind Fasern mit Durchmessern < 1 µm als "dünn" einzuordnen. Sie erzeugen die gewünschte Mikroporosität und sind für ein gutes Elektrolytrückhaltevermögen verantwortlich. Ihre mechanische Widerstandsfähigkeit ist dafür gering, weshalb solche Vliese, denen Fasermischungen mit überwiegendem Anteil der letztgenannten Mikroglasfasern zugrundeliegen, durch Bindemittel verfestigt sind, um sie bei der Batteriemontage besser handhaben zu können (vgl. US-PS 4 216 280).

Gemäß DE-AS 2 720 250 beruht ein bleibender Kontakt der Elektroden eines Bleiakkumulators mit dem Säureelektrolyten auf der Quellfähigkeit fein verteilter Kieselsäure, indem dieser Gelbildner in gepreßter Form als eigentliches Separatormaterial zwischen die Elektroden eingebaut wird.

Schließlich ist es aus der DE-PS 711 484 bekannt, bei Separatoren aus einem Glasgespinst dadurch ein dichtes Anliegen an den Bleiplatten zu erzielen, daß man das Gespinst mit einem wasserlöslichen Klebstoff imprägniert, unter schwachem Druck und Erwärmen zu Platten verpreßt und diese in dem durch das Klebemittel fixierten Preßzustand einbaut.

Der Erfindung liegt die Aufgabe zugrunde, einen Glasvliesscheider für Bleiakkumulatoren anzugeben, der sich zusammen mit den Elektrodenplatten gut verarbeiten läßt und sich im Zustand des Engeinbaus deren Oberflächen eng anschmiegt.

Die gestellte Aufgabe wird gemäß der Erfindung gelöst durch einen Separator, wie er im Patentanspruch 1 angegeben ist, bzw. durch ein Verfahren zum Herstellen eines solchen Separators, wie es in den Patentansprüchen 4 oder 5 definiert ist.

Danach liegt in dem erfindungsgemäßen Glasvliesscheider entgegen der sonst gewohnten Qualität und lockeren Konsistenz ein Glasfaservlies vor, das durch Kompression in einen Zustand der Vorspannung versetzt wurde und aus welchem Zustand das Vlies sich zu befreien trachtet, sobald es mit einem wässrigen Elektrolyten, hier der Batteriesäure, benetzt wird. Die Aufhebung der Vorspannung äußert sich durch einen entsprechenden Expansionsdruck, unter dessen Wirkung sich das Vlies an die angrenzenden Elektroden anschmiegt.

Zu diesem Verhalten ist der erfindungsgemäße Separator dank Imprägnierung mit einem wasserlöslichen bzw. säurelöslichen Bindemittel befähigt, welches das Fasergerüst im zusammengedrückten Zustand fixiert und die natürlichen Rückstellkräfte der elastischen Glasfasern damit abblockt, in Berührung mit der Schwefelsäure jedoch sich in derselben löst oder quillt, so daß die Rückstellkräfte nunmehr freigesetzt sind. Das Vlies sucht in einen möglichst spannungsfreien Ausgangszustand zurückzufedern, was ihm allerdings durch den engen Plattenstand in der Zelle verwehrt wird. Die elastische Rückfederungskraft wirkt aber zumindest jeder weiteren Dickenabnahme des Vlieses unter dem Einfluß der zellinternen Kompressionskräfte entgegen und stellt einen dauernden flächigen Kontakt zu den Plattenoberflächen sicher.

Gegenüber einem nicht vorgepreßten Glasfaservlies sollte ein Vlies gemäß der Erfindung eine um 30°% bis 50 °%, vorzugsweise um etwa 40 % reduzierte Dicke besitzen.

Die Konzentration an wasserlöslichem Bindemittel in dem Fasermaterial, welche ausreicht, um den durch die Vorpressung erzeugten Zustand der Vorspannung wenigstens bis zum Zeitpunkt der vollständigen Elektrolytbenetzung beim Einfüllen der Säure aufrechtzuerhalten, sollte zwischen 0,1% und 5,0 %, vorzugsweise bei ca. 0,25 % liegen.

Als für den erfindungsgemäßen Zweck geeignete Bindemittel oder "Verdicker" kommen verschiedene Zellulosederivate infrage, neben der bevorzugten Methylzellulose, z.B. Carboxymethylzellulose, Ethylhydroxyethylzellulose, Hydroxypropylmethylzellulose oder Hydroxyethylzellulose, ferner Fischleim, Sojabohnenleim, Guarmehl (aus der Frucht des Johannisbrotbaums) und schließlich Klebstoffe auf Stärke- bzw. Dextrin-Basis.

Nach den Verfahrensansprüchen 4 und 5 führen grundsätzlich zwei Herstellungswege für den Batterieseparator zum Ziel. Oer wirtschaftlichere von beiden sieht vor, gemäß Anspruch 4 die erfindungswesentliche Vorpressung des Scheidermaterials direkt in dessen Herstellungsgang miteinzubeziehen. In diesem Fall wird dem Glasfasern-Wassergemisch erfindungsgemäß zunächst ein wasser- bzw. säurelösliches Bindemittel zugegeben und die Pulpe dann auf ein Sieb oder andere, aus der Papierherstellung bekannte Vorrichtungen zum Abtrennen oder Absaugen der Hauptflüssigkeitsmenge verbracht, mit welcher auch Reste des Bindemittels abfließen. Es ist auch möglich, die Faserpulpe, nachdem sie bereits abgesiebt ist, mit einer Bindemittellösung einzusprühen.

Die Konzentration des Bindemittels in der Faser-Aufschlämmung bzw. in der Sprühlösung sollte etwa 0,1°% bis 0,3 % betragen. Sie ist so einzustellen, daß das endgetrocknete, fertige Vlies zwischen 0,1% und 5,0 %, vorzugsweise etwa 0,25 % Bindemittel enthält.

Die Auswahl des Glasfasermaterials ist nicht Gegenstand der Erfindung, jedoch sollten mit Rücksicht auf das weiter oben Gesagte dicke und dünne Fasern bei einem Mischungsansatz in einem ausgewogenen Verhältnis stehen. Eine günstige Mischung kann beispielsweise zu 2/3 aus Fasern des Durchmessers 2,7 µm und zu 1/3 aus Fasern des Durchmessers 0,9 µm zusammengesetzt sein.

Vor der Endtrocknung wird das noch feuchte bindemittelhaltige Vliesmaterial erfindungsgemäß vorgepreßt, derart, daß die Dicke des Vlieses um 30% bis 50 % reduziert ist. Besonders zweckmäßig und fertigungsnah erfolgt diese Pressung an einem Glasvliesband während des Trocknens, wenn es noch zwischen 50% und 60 % Feuchtigkeit enthält, indem man es durch ein Walzenpaar laufen läßt, wobei ein bestimmter Walzenspalt die angegebene Vorpressung erzeugt.

Bei der Vorpressung soll das noch feuchte Fasergerüst, welches bei normalen Glasvliesen mit 5% bis 15 Vol.% deren gesamten Feststoffanteil ausmacht, im verdichteten Zustand mit dem Bindemittel "verbacken" und durch die anschließende Endtrocknung in diesem Zustand fest verkleben.

Wegen des geringen Festkörpergehalts ist der Kraftaufwand für das Zusammendrücken des Vlieses gering. Bei einer Flächenpressung (Fläche = 1 dm²) wurden 1,6 N/cm² für Dickenabnahme 30 % und 2,1 N/cm² für Dickenabnahme 40 % gemessen.

Die Bereitstellung eines erfindungsgemäß vorgepreßten und mit wasserlöslichen Bindemitteln verfestigten Glasvliesscheiders ist aber auch auf dem in Anspruch 5 aufgezeigten Wege möglich, da die erfindungsgemäßen Maßnahmen auch an bereits fertigen Vliesscheidern aus der Produktion des Zulieferers getroffen werden können. Das Verfahren gemäß der Erfindung erweist sich dadurch als besonders flexibel und anpassungsfähig an die beim Batteriehersteller gerade vorhandenen fertigungstechnischen Möglichkeiten und Voraussetzungen.

Das fertige Vliesmaterial, alternatives Ausgangsprodukt für die erfindungsgemäße Behandlung, kann bereits Bindemittel von wasserunlöslicher Art, z.B. auf Basis von Kunstharzen, enthalten. Es wird durch Wässern unter Zusatz von Methylzellulose oder einem anderen Bindemittel gemäß der Erfindung bzw. durch direktes Eintränken mit einer Lösung desselben zunächst in den Zustand einer Faserpulpe "zurückversetzt", entwässert und darauf in der schon beschriebenen Weise vorgepreßt und endgetrocknet.

Die erfindungsgemäße Vorpressung der Glasvliesscheider hat sich sowohl für ihre Handhabung beim Zusammenstellen der Plattensätze als auch für die Batteriefunktion, insbesondere für den dichtverschlossenen Akkumulator mit festgelegtem Elektrolyten, als außerordentlich vorteilhaft erwiesen. Dank ihrer Formfestigkeit im trockenen Gebrauchszustand lassen sie sich manuell gut verlegen und ausrichten, was deshalb wichtig ist, weil ein gewisser Überstand über den Plattenumriß eingehalten werden muß, um Kurzschlüsse zu vermeiden.

Der Hauptvorteil der erfindungsgemäßen Maßnahmen stellt sich jedoch erst beim Befüllen der Batterie mit dem Elektrolyten ein, indem sich das Bindemittel durch die Säurebenetzung löst bzw. aufquillt und das Fasergerüst aus dem vorgepreßten Zustand aufzugehen trachtet. Durch dieses Relaxationsbestreben erzeugt der vorgespannte Separator einen Druck auf die angrenzenden Elektrodenplatten. Dieser Druck verhindert, daß der Separator durch den einbaubedingten Kompressionsdruck innerhalb des Plattenblocks eine weitere Verdichtung erfährt. Vielmehr wirkt dieser Druck mit der vereinten Rückfederungskraft der gespannten Glasfasern jeder Kompression des Vlieses entgegen und gewährleistet einen festen beiderseitigen Kontakt zu den benachbarten Elektrodenflächen. Das Aufgehen des Scheiders aus der Vorpressung ermöglicht nicht nur eine bessere Verteilung und Diffusion der Säure, sondern es wird auch das Elektrolyt-Absorptionsverhältnis im Vergleich zum gepreßten Trockenzustand erhöht. Damit sind wesentliche Voraussetzungen erfüllt, um nicht nur gute elektrische Werte zu erzielen, sondern auch Garantien, die sich z.B. auf Kapazitäten oder Zyklenlebensdauer erstrecken, mit mehr Sicherheit geben zu können.

Eine Figur zeigt das unterschiedliche Verhalten eines gewöhnlichen, mit einem Acrylharz gebundenen Mikroglasvlieses (A), welches nicht vorgepreßt wurde, und eines erfindungsgemäß nachbehandelten Vlieses der gleichen Art (B) bei der Säureaufnahme.
In dem Diagramm ist die Scheiderdicke d (in %) gegen die zugegebene Säuremenge s (in %) aufgetragen, wobei die Ausgangsdicken des erfindungsgemäßen Scheiders B (mit 0,25 % Methylzellulose imprägniert, getrocknet und von d = 2,0 mm auf d = 1,4 mm (= 100 %) vorgepreßt) und des nicht gepreßten Vergleichsmusters A einander gleichgesetzt sind. Während beim Vergleichsmuster mit zunehmender Benetzung durch die Schwefelsäure (ρ = 1,28 g/ml) eine deutliche Volumenkontraktion erkennbar ist, die nahe am Sättigungswert über - 2 % hinausgeht, findet beim erfindungsgemäßen Scheider eine starke Aufquellung bis zu einer Dicke d = 1,76 mm (= 125 %) statt. Dies bedeutet eine Rückfederung von 70 % im vorgepreßten Zustand auf 80 % der ursprünglichen Dicke. Mit einem entsprechenden Quelldruck von ca. 1,6 N/cm² widersteht der eingebaute Scheider der Kompressionskraft der Platten.

Ein weiterer Vorteil des erfindungsgemäßen Verfahrens ergibt sich daraus, daß die gebundenen Glasfaservliese im noch feuchten Zustand gut formbar sind und unter diesem Aspekt auch die Herstellung vorgeformter Scheider, z.B. für Rundzellen, als möglich erscheint. Dadurch könnte das bisher eingesetzte Trägermaterial, welches zur Formgebung dient, entfallen.

Für diesen Anwendungsfall wäre der bereits genannte Restwassergehalt von 50% bis 60 % ebenfalls sehr günstig, weil infolge der darin erreichten hohen Bindemittelkonzentration auch der Klebeeffekt entsprechend groß ist.

Schließlich hat sich in Versuchen gezeigt, daß das vorgepreßte, mit Leim versehene Scheidermaterial bei der Säurefüllung der Zellen gut benetzbar ist und keine Lufteinschlüsse zurückläßt. Bisherige Batterien mit festgelegtem Elektrolyten mußten wegen ungenügender Benetzbarkeit bzw. Entlüftung der Scheider langsam gefüllt werden. Als Beispiel aus der Praxis sei erwähnt, daß eine 60 Ah-Batterie in 5 bis 7 Minuten mit Schwefelsäure gefüllt wird. Die luftblasenfreie Füllung einer vergleichbaren Batterie mit vorgepreßtem Glasvlies ist dagegen innerhalb von 30 Sekunden möglich.

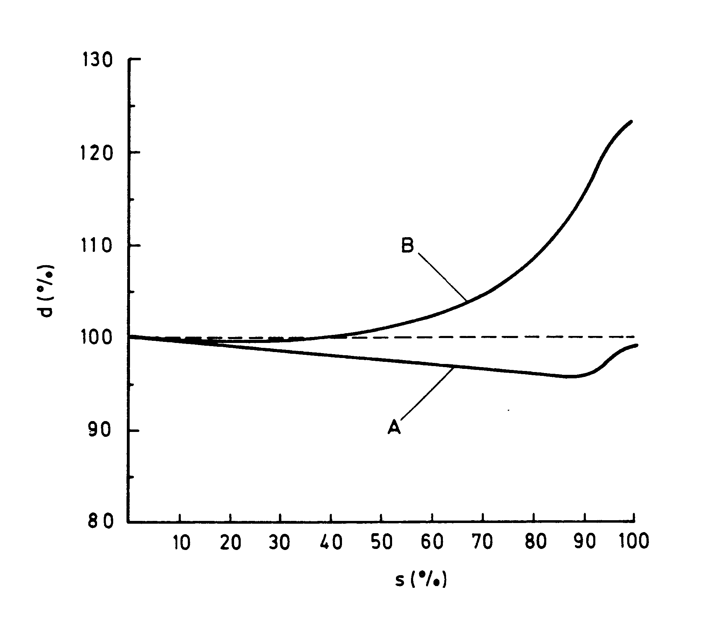

## Patentansprüche

1. Separator für Bleiakkumulatoren aus einem Glasfaservlies mit einem Bindemittel, dadurch gekennzeichnet, daß das Glasfaservlies durch Imprägnierung mit einem Bindemittel in vorgepreßtem Zustand unter Vorspannung steht, wobei es eine gegenüber dem spannungsfreien Ausgangsvlies um 30% bis 50%, vorzugsweise etwa 40% verringerte Dicke besitzt, und daß das Bindemittel wasserlöslich ist, so daß das Separatorvlies nach Benetzung mit einem Elektrolyten sich unter Druckeinwirkung an die angrenzenden Elektroden anlegt.

2. Separator nach Anspruch 1, dadurch gekennzeichnet, daß die Konzentration des wasserlöslichen Bindemittels im Fasermaterial zwischen 0,1 % und 5,0%, vorzugsweise bei ca. 0,25% liegt.

3. Separator nach einem der Ansprüche 1 bis 2, dadurch gekennzeichnet, daß das wasserlösliche Bindemittel Methylzellulose ist.

4. Verfahren zur Herstellung eines Separators nach einem der Ansprüche 1 bis 3, dadurch gekennzeichnet, daß Glasfasern in Wasser aufgeschlämmt werden, daß aus der Faserpulpe durch Absieben, Entwässern und Trocknen ein Wirrfaservlies erhalten wird und daß ein wasserlösliches Bindemittel entweder durch Einrühren in die Faser-Aufschlämmung oder durch Besprühen der abgesiebten Faserpulpe mit einer Bindemittel-Lösung in das Glasfasermaterial eingebracht wird und die entwässerte Faserpulpe vorgepreßt und im gepreßten Zustand, bei dem die Dicke des Vliesmaterials gegenüber dem Zustand vor der Pressung um 30% bis 50% reduziert ist, endgetrocknet wird.

5. Verfahren zur Herstellung eines Separators nach einem der Ansprüche 1 bis 3, dadurch gekennzeichnet, daß ein Glasfaservlies-Separator mit der Lösung eines wasserlöslichen Bindemittels getränkt, anschließend entwässert, vorgepreßt und in gepreßter Form, bei der die Dicke des Vlieses gegenüber dem Zustand vor der Pressung um 30% bis 50% reduziert ist, getrocknet wird.

6. Verfahren zur Herstellung eines Batterieseparators nach einem Anspruch 4 oder 5, dadurch gekennzeichnet, daß die Bindemittelkonzentration in der Faser-Aufschlämmung bzw. in der Tränklösung 0,1 % bis 0,3% beträgt.

7. Verfahren nach Anspruch 4 oder 6, dadurch gekennzeichnet, daß das bei der Entwässerung anfallende lockere Vlies auf eine um etwa 40% geringere Dicke zusammengepreßt wird.

8. Verwendung eines Separators nach einem der Ansprüche 1 bis 3 als Trennelement zwischen positven und negativen Elektrodenplatten in dicht verschlossenen Bleiakkumulatoren mit festgelegtem Elektrolyten.

## Claims

1. Separator for lead accumulators, comprising a glass fibre nonwoven having a binder, characterized in that the glass fibre nonwoven is under pre-tension by impregnation with a binder in the pre-pressed state, the glass fibre nonwoven having a thickness which by comparison with the untensioned starting nonwoven is reduced by 30% to 50%, preferably approximately 40%, and in that the binder is water-soluble, so that after being wetted with an electrolyte the separator nonwoven bears by the action of pressure against the adjacent electrodes.

2. Separator according to Claim 1, characterized in that the concentration of water-soluble binder in the fibre arterial is between 0.1% and 5.0%, preferably in the region of approximately 0.25%.

3. Separator according to one of Claims 1 to 2, characterized in that the water-soluble binder is methylcellulose.

4. Process for producing a separator according to one of Claims 1 to 3, characterized in that glass fibres are made into a slurry in water, in that a tangled fibre nonwoven is obtained from the fibre pulp by sifting, dewatering and drying, and in that a water-soluble binder is introduced into the glass fibre material either by stirring into the fibre slurry or by spraying the sifted fibre pulp with a binder solution, and the dewatered fibre pulp is pre-pressed and, in the pressed state in which the thickness of the nonwoven material by comparison with the state before pressing is reduced by 30% to 50%, is dried completely.

5. Process for producing a separator according to one of Claims 1 to 3, characterized in that a glass fibre nonwoven separator is impregnated with the solution of a water-soluble binder, is then dewatered, pre-pressed and, in the pressed form in which the thickness of the fleece by comparison with the state before pressing is reduced by 30% to 50%, is dried.

6. Process for producing a battery separator according to Claim 4 or 5, characterized in that the inder concentration in the fibre slurry or in the impregnation solution is 0.1% to 0.3%.

7. Process according to Claim 4 or 6, characterized in that the loose nonwoven which is produced on dewatering is pressed together to a thickness which is approximately 40% smaller.

8. Use of a separator according to one of Claims 1 to 3 as a separating element between positive and negative electrode plates in sealed lead accumulators having a set electrolyte.

## Revendications

1. Séparateur pour accumulateurs au plomb constitué par un non-tissé en fibres de verre avec un liant, séparateur caractérisé en ce que le non-tissé en fibres de verre, du fait de son imprégnation avec un liant, se trouve sous précontrainte à l'état précomprimé, tandis que par rapport au non-tissé de départ, libre de contrainte, il a une épaisseur réduite de 30 à 50 %, de préférence d'environ 40 %, et en ce que le liant est soluble dans l'eau, de sorte que le non-tissé du séparateur après mouillage par un électrolyte s'applique sous l'action de la pression contre les électrodes contiguës.

2. Séparateur selon la revendication 1, caractérisé en ce que la concentration dans le matériau en fibres du liant soluble dans l'eau, se situe entre 0,1 et 5,0 %, de préférence à environ 0,25 %.

3. Séparateur selon une des revendications 1 à 2, caractérisé en ce que le liant soluble dans l'eau est la méthyle cellulose.

4. Procédé pour la fabrication d'un séparateur selon une des revendications 1 à 3, procédé caractérisé en ce que des fibres de verre sont dispersées dans de l'eau, en ce que, à partir de la pulpe de fibres, par tamisage, égouttage et séchage, un non-tissé à fibres entremêlées est obtenu et en ce qu'un liant soluble dans l'eau est introduit dans le matériau en fibres de verre, soit par délayage dans la dispersion de fibres, soit par aspersion de la pulpe de fibres tamisée avec une solution de liant, et la pulpe de fibres égouttée est pré-comprimée et est définitivement séchée à l'état comprimé dans lequel l'épaisseur du matériau non tissé est réduite de 30 % à 50 % par rapport à l'état avant pressage.

5. Procédé pour la fabrication d'un séparateur selon une des revendications 1 à 3, caractérisé en ce qu'un séparateur en non-tissé de fibres de verre est imbibé avec la solution d'un liant soluble dans l'eau, ensuite égoutté, pré-comprimé et séché sous la forme comprimée dans laquelle l'épaisseur du non-tissé est réduite de 30 à 50 % par rapport à l'état avant pressage.

6. Procédé pour la fabrication d'un séparateur de batterie selon la revendication 4 ou la revendication 5, caractérisé en ce que la concentration en liant dans la dispersion des fibres ou bien dans la solution d'imbibition, est de 0,1 % à 0,3 %.

7. Procédé selon la revendication 4 ou la revendication 6, caractérisé en ce que le non-tissé lâche obtenu lors de l'égouttage est comprimé à une épaisseur réduite d'environ 40 %.

8. Utilisation d'un séparateur selon une des revendications 1 à 3 comme élément de séparation entre des plaques d'électrodes positives et négatives dans des accumulateurs au plomb étanches à électrolytes stabilisées.
